# EUROPEAN PATENT APPLICATION

(11) **EP 4 738 870 A1**
(43) Date of publication of application: **06.05.2026**
(21) Application number: 24831706.7
(22) Date of filing: 14.06.2024
(51) Int. Cl.: H04N 25/773

(54) **PHOTOELECTRIC CONVERSION DEVICE AND PHOTOELECTRIC CONVERSION SYSTEM HAVING SAID PHOTOELECTRIC CONVERSION DEVICE**

(30) Priority: 30.06.2023 JP 2023108683
(71) Applicant: Canon Kabushiki Kaisha, Tokyo, 146-8501 (JP)
(72) Inventor: SEKINE, Hiroshi, Tokyo 146-8501 (JP); MORIMOTO, Kazuhiro, Tokyo 146-8501 (JP)
(74) Representative: Canon Europe Limited
(86) International application number: PCT/JP2024/021596
(87) International publication number: WO 2025/004841

(57) **Abstract**

A photoelectric conversion device includes a photoelectric conversion element configured to generate a photon detection signal by avalanche multiplication; a circuit configured to control a first state in which a first terminal of the photoelectric conversion element is connected to a power-supply voltage and a second state in which resistance between the first terminal and the power-supply voltage is higher than in the first state; a counter circuit connected to the photoelectric conversion element; a waveform shaping circuit disposed between the photoelectric conversion element and the counter circuit; and a gating circuit connected between an output node of the waveform shaping circuit and an input node of the counter circuit and configured to control whether or not to input an output signal of the waveform shaping circuit to the counter circuit.

## Description

### Technical Field

The present invention relates to a photoelectric conversion device and to a photoelectric conversion system including the photoelectric conversion device.

### Background Art

Photoelectric conversion devices utilizing avalanche (electron avalanche) multiplication and capable of detecting faint light at a single photon level are known.

### Citation List

### Patent Literature

PTL 1: Japanese Patent Laid-Open No. 2020-123847

### Summary of Invention

### Technical Problem

PTL 1 discloses a photoelectric conversion device that performs so-called clock-recharge driving. In the photoelectric conversion device described in PTL 1, in order to prevent pile-up under high illuminance, there are cases where the sensitivity of each pixel is adjusted, for example, to a low sensitivity. In this case, there is a concern of deterioration in image quality if the period of photon detection is shortened or the clock frequency is lowered.

### Solution to Problem

One aspect of the present invention is a photoelectric conversion device that includes a photoelectric conversion element configured to generate a photon detection signal by avalanche multiplication; a circuit configured to control a first state in which a first terminal of the photoelectric conversion element is connected to a power-supply voltage and a second state in which resistance between the first terminal and the power-supply voltage is higher than in the first state; a counter circuit connected to the photoelectric conversion element; a waveform shaping circuit disposed between the photoelectric conversion element and the counter circuit; and a gating circuit connected between an output node of the waveform shaping circuit and an input node of the counter circuit and configured to control whether or not to input an output signal of the waveform shaping circuit to the counter circuit.

Another aspect of the present invention is a photoelectric conversion device that includes a photoelectric conversion element configured to generate a photon detection signal by avalanche multiplication; a resistor element provided between a first terminal of the photoelectric conversion element and a power-supply voltage; a counter circuit connected to an output node of the photoelectric conversion element; a waveform shaping circuit disposed between the photoelectric conversion element and the counter circuit; and a gating circuit disposed between an output node of the waveform shaping circuit and an input node of the counter circuit and configured to control whether or not to input an output signal of the waveform shaping circuit to the counter circuit, wherein, during one standby state, there are a first period in which an output signal of the waveform shaping circuit is counted and a second period in which the gating circuit is controlled so as not to count an output signal of the waveform shaping circuit; and the photoelectric conversion device includes a circuit configured to count a number of the first periods in which the output signal of the waveform shaping circuit has been counted.

### Advantageous Effects of Invention

The present invention makes it possible to perform sensitivity adjustment of a photoelectric conversion device while suppressing deterioration in image quality.

### Brief Description of Drawings

[Fig. 1] Fig. 1 is a schematic configuration diagram of a photoelectric conversion device according to a first embodiment.
[Fig. 2] Fig. 2 is a circuit-diagram configuration example of a photoelectric conversion device according to the first embodiment.
[Fig. 3] Fig. 3 is an operation sequence chart of a photoelectric conversion device according to the first embodiment.
[Fig. 4] Fig. 4 is a circuit-diagram configuration example of a photoelectric conversion device according to a second embodiment.
[Fig. 5] Fig. 5 is an operation sequence chart of a photoelectric conversion device according to the second embodiment.
[Fig. 6] Fig. 6 is a circuit-diagram configuration example of a photoelectric conversion device according to a third embodiment.
[Fig. 7] Fig. 7 is an operation sequence chart of a photoelectric conversion device according to the third embodiment.
[Fig. 8] Fig. 8 is a schematic diagram of a photoelectric conversion device of a photoelectric conversion device according to a fourth embodiment.
[Fig. 9] Fig. 9 is a circuit-diagram configuration example of a photoelectric conversion device according to the fourth embodiment.
[Fig. 10] Fig. 10 is an operation sequence chart of a photoelectric conversion device according to the fourth embodiment.
[Fig. 11] Fig. 11 is a schematic diagram of a photoelectric conversion device of a photoelectric conversion device according to a fifth embodiment.
[Fig. 12] Fig. 12 is a circuit-diagram configuration example of a photoelectric conversion device according to the fifth embodiment.
[Fig. 13] Fig. 13 is an operation sequence chart of a photoelectric conversion device according to the fifth embodiment.
[Fig. 14] Fig. 14 is a functional block diagram of a photoelectric conversion system according to a sixth embodiment.
[Fig. 15] Fig. 15 is a functional block diagram of a photoelectric conversion system according to a seventh embodiment.
[Fig. 16A] Fig. 16A is a functional block diagram of a photoelectric conversion system according to an eighth embodiment.
[Fig. 16B] Fig. 16B is a functional block diagram of a photoelectric conversion system according to the eighth embodiment.
[Fig. 17] Fig. 17 is a functional block diagram of a photoelectric conversion system according to a ninth embodiment.
[Fig. 18] Fig. 18 is a functional block diagram of a photoelectric conversion system according to a tenth embodiment.
[Fig. 19A] Fig. 19A is a functional block diagram of a photoelectric conversion system according to an eleventh embodiment.
[Fig. 19B] Fig. 19B is a functional block diagram of a photoelectric conversion system according to the eleventh embodiment.

### Description of Embodiments

### (First Embodiment)

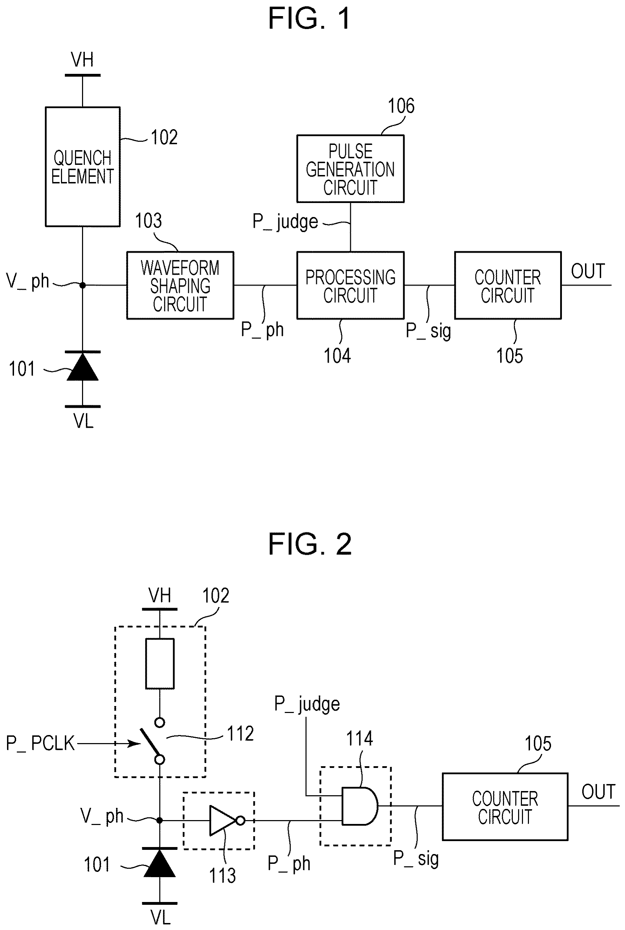

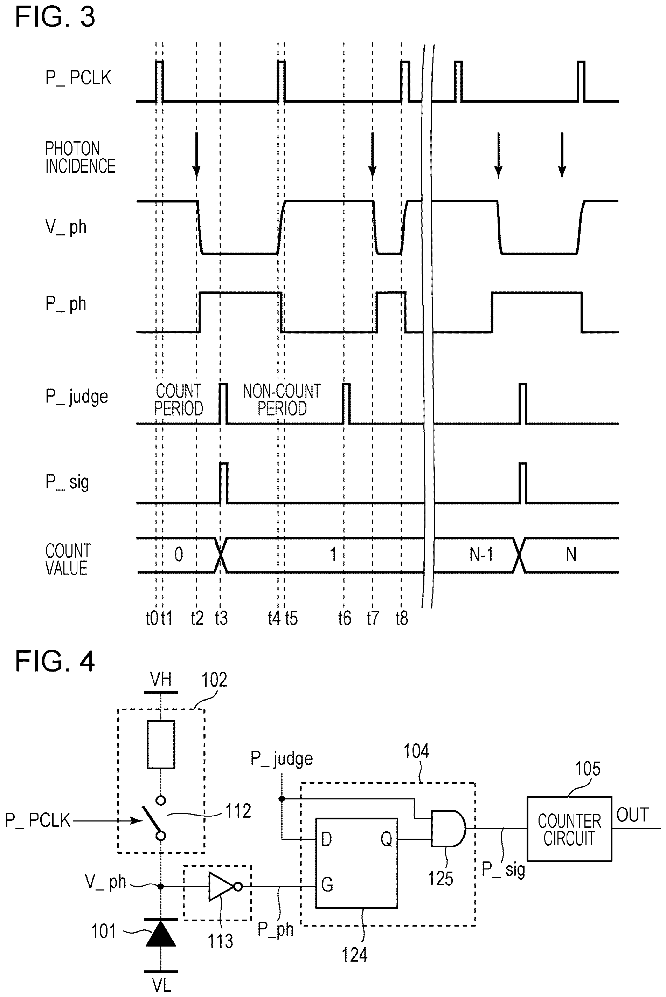

A photoelectric conversion device according to a first embodiment will be described with reference to Figs. 1 to 3. Fig. 1 is a schematic configuration diagram per pixel of the photoelectric conversion device. Fig. 2 is a specific circuit-diagram configuration example. Fig. 3 is an operation sequence chart for the circuit configuration of Fig. 2.

An avalanche photodiode (APD) 101 is a photodiode that generates charge pairs according to incident light by photoelectric conversion. A voltage VL (first voltage) is supplied to the anode of the APD 101. A voltage VH (second voltage), which is higher than the voltage VL supplied to the anode, is supplied to the cathode of the APD 101, and a reverse bias voltage that causes an avalanche multiplication operation is applied to the APD 101. Supplying such voltages causes the avalanche multiplication of the charge generated by the light incident on the APD 101, thus generating an avalanche current.

When a reverse bias voltage is supplied to the APD 101, there are operations in a Geiger mode and in a linear mode. In the Geiger mode, voltages larger than the breakdown voltage are applied to the anode and the cathode to operate the APD 101. In the linear mode, the APD 101 is operated with the potential difference between the anode and the cathode being around the breakdown voltage or at a voltage difference equal to or less than the breakdown voltage. An APD operated in the Geiger mode is called an SPAD. For example, the voltage VL (first voltage) is -30 V, and the voltage VH (second voltage) is 1 V.

A quench element 102 is connected between a power supply that supplies the voltage VH and the cathode terminal of the APD 101. The quench element 102 functions as a load circuit during signal multiplication due to the avalanche multiplication, suppresses the voltage supplied to the APD 101, and performs a quench operation that suppresses the avalanche multiplication.

An output signal of the APD 101 is input to a subsequent waveform shaping circuit 103. The waveform shaping circuit 103 shapes a potential change of the cathode of the APD 101 at the time of photon detection and outputs a pulse signal P_ph. For example, an inverter circuit 113 is used as the waveform shaping circuit 103. In Fig. 2, an example is shown in which one inverter circuit is used as the waveform shaping portion; however, a circuit in which plural inverters are connected in series may be used, or any other circuit having a waveform shaping effect may be used.

A processing circuit 104 provided downstream of the waveform shaping circuit 103 receives the pulse signal P_ph output from the waveform shaping circuit 103 and a judge signal P_judge output from a pulse generation circuit 106, and outputs a pulse signal P_sig. A counter circuit 105 counts the pulse signal P_sig output from the processing circuit and holds the count value. In other words, the processing circuit 104 is a gating circuit connected between the output node of the waveform shaping circuit 103 and the input node of the counter circuit 105, and controls whether or not to input the output signal of the waveform shaping circuit 103 to the counter circuit 105.

Fig. 2 illustrates an example of a specific circuit configuration that realizes, for each pixel, the schematic configuration illustrated in Fig. 1. As described above, each pixel of the photoelectric conversion device illustrated in Fig. 2 includes one inverter circuit 113 as the waveform shaping circuit 103. The pulse signal P_ph, which is the output of the inverter circuit 113, and the judge signal P_judge are input to an AND circuit 114 that constitutes the processing circuit 104. The AND circuit 114 outputs the logical product of the pulse signal P_ph and the judge signal P_judge as the pulse signal P_sig.

The quench element 102 includes a switch 112 controlled by means of a clock signal P_PCLK and causes the APD 101 to be driven in a clock-recharge manner. That is, by means of the clock signal P_PCLK, the APD 101 is controlled to a standby state (second state) in which avalanche multiplication is possible, and to a charge state (first state) controlled to a state in which avalanche multiplication is possible. In the charge state, the switch is in an ON state, and the cathode (first terminal) of the APD 101 is connected to the power-supply voltage. In the standby state, since the switch is turned OFF, the cathode of the APD 101 is in a state of not being connected to the power-supply voltage. That is, between the cathode of the APD 101 and the power-supply voltage, it becomes a higher-resistance state as compared with the charge state. When a photon enters the APD 101 during the standby state, avalanche multiplication occurs and the voltage of V_ph drops. After that, by the inputting of the clock signal P_PCLK to the switch 112, the switch 112 turns ON, the voltage is charged, and the voltage of V_ph returns to the initial state.

At this time, a count period (first period) and a non-count period (second period) are defined by the clock signal P_PCLK and the judge signal P_judge. The count period is a period in which, based on photons detected by the APD 101, the signals output from the waveform shaping circuit 103 are counted by the counter circuit 105. The non-count period is a period in which the counting of the signals output from the waveform shaping circuit 103 is not performed. The count period is a period from the falling edge of a pulse of the clock signal P_PCLK to the falling edge of a pulse of the judge signal P_judge. The non-count period is a period from the falling edge of a pulse of the judge signal P_judge to the falling edge of a pulse of the clock signal P_PCLK.

At time t0 in Fig. 3, the clock signal P_PCLK is input to the quench element 102, and at time t1, the APD enters the standby state. When a photon enters the APD 101 at time t2, V_ph drops along with the occurrence of avalanche multiplication, and, upon a decision threshold being exceeded, the pulse signal P_ph rises.

When the judge signal P_judge is input to the AND circuit 114 at time t3, the pulse signal P_sig, which is the logical product of the pulse signal P_ph and the judge signal P_judge, is output. At time t4, the clock signal P_PCLK is input again to the switch 112 of the quench element, and the APD 101 enters the charge state. That is, V_ph is charged, and, upon a decision threshold being exceeded, P_ph falls.

At time t4, the APD 101 is charged, and, in the next standby-state period starting from time t5, the judge signal P_judge is input to the AND circuit 114 at time t6. At this time, the pulse signal V_ph is in a state where the reverse bias voltage is charged, and the pulse signal P_ph is Low. Accordingly, the pulse signal P_sig, which is the output of the AND circuit 114, is also Low. After that, the judge signal P_judge falls.

By the input of the judge signal P_judge, the non-count period starts. When a photon enters the APD 101 at time t7, the pulse signal P_ph rises in accordance with the drop of V_ph; however, since the judge signal P_judge is Low, the pulse signal P_sig is also Low. At time t8, the clock signal P_PCLK is input, and, when V_ph is charged beyond the decision threshold, the pulse signal P_ph falls. In this standby-state period, there is no photon incidence on the APD 101 within the count period, and there is a photon incidence on the APD 101 only within the non-count period; therefore, the counting of photon detection signals is not performed.

In this configuration, if the pulse signal P_ph is High at the timing when the judge signal P_judge is input to the processing circuit, one pulse is input, as the pulse signal P_sig, to the counter circuit 105. Conversely, if the pulse signal P_ph is Low, the pulse signal P_sig is not input to the counter circuit 105, and the counting is not performed. Accordingly, it is possible to perform sensitivity adjustment of the pixel by adjusting the timing at which the judge signal P_judge is input to the processing circuit 104. In other words, during one standby-state period, there exist the count period, in which the counting of the pulse signal P_sig is performed, and the non-count period, in which the counting of the pulse signal P_sig is not performed, with the input of the judge signal P_judge serving as a boundary therebetween.

As a method of adjusting sensitivity on a pixel-by-pixel basis in a circuit that performs conventional clock-recharge driving, there is a method of lowering the frequency of the clock signal P_PCLK and reducing the number of the clock signals P_PCLK per unit time. In this case, there is a concern about a decrease in gradation and deterioration of an S/N ratio. There is also a method of shortening the period of charge accumulation while maintaining the frequency of the clock signal P_PCLK; however, since a period with no charge accumulation occurs during the period of exposure, there is a possibility that this method might cause deterioration in image quality, such as the appearance of flickers. The present method realizes sensitivity adjustment of a photoelectric conversion device without causing such image-quality deterioration.

### (Second Embodiment)

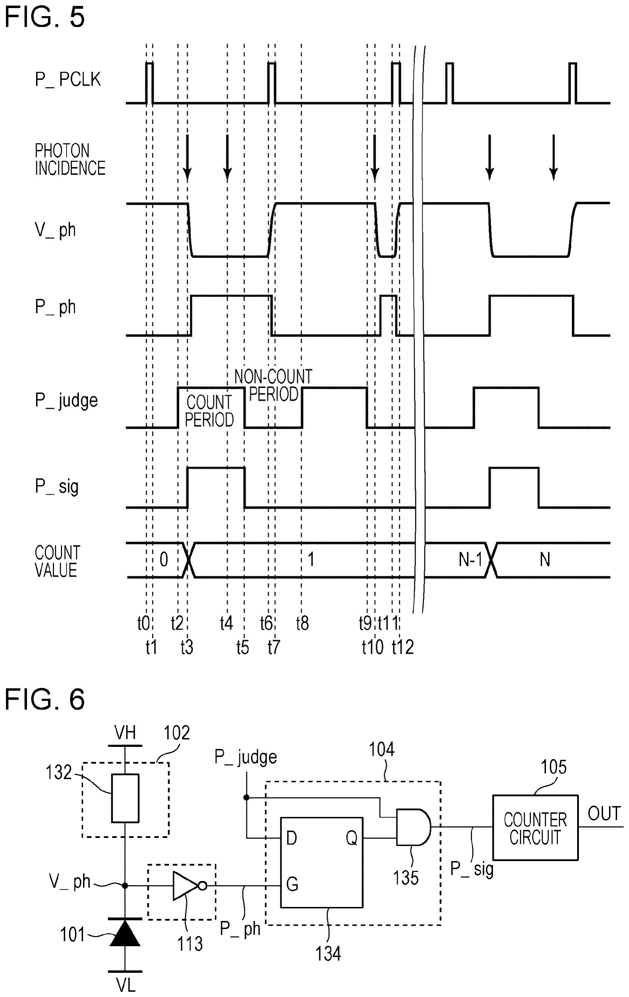

A photoelectric conversion device according to a second embodiment will be described with reference to Figs. 4 and 5. The photoelectric conversion device according to the second embodiment uses a gating circuit different from that of the photoelectric conversion device according to the first embodiment.

Fig. 4 is a specific circuit-diagram configuration example of a photoelectric conversion device according to the present embodiment. Fig. 5 is an operation sequence chart for the circuit configuration of Fig. 4. The count period, in which the output signals of the waveform shaping circuit 103 are counted by the counter circuit 105, and the non-count period, in which the output signals of the waveform shaping circuit 103 are not counted by the counter circuit 105, are defined by High and Low of the judge signal P_judge signal. In the following description, the count period is defined as a period in which the judge signal P_judge is High. Note that, within one recharge period, it is necessary to set the period in which the judge signal P_judge becomes High to be no more than once. This is because, if the judge signal P_judge becomes High twice or more within the recharge period, there is a possibility that the pulse signal P_sig might be output twice or more for one photon.

The photoelectric conversion device according to the present embodiment includes, as the processing circuit 104, a D latch circuit 124 and an AND circuit 125. An output signal of a waveform shaping circuit is input to an input G of the D latch circuit 124, and the judge signal P_judge is input to an input D thereof. An output Q and the judge signal P_judge are input to the AND circuit 125, and an output signal of the AND circuit 125 is input, as the pulse signal P_sig, to the counter circuit 105. When the input G is High, the D latch circuit 124 outputs the input D from the output Q. When the input G changes from High to Low, this circuit outputs, from the output Q, the value of the input D immediately before the change of the input G, and, while the input G is Low, holds that value at the output Q.

At time t0 in Fig. 5, the clock signal P_PCLK is input to the switch 112 of the quench element, and at time t1, the APD 101 enters the standby state. At time t2, the judge signal P_judge is input to the input D of the D latch circuit 124 and to one of the input terminals of the AND circuit 125, and the count period begins. When a photon enters the APD 101 at time t3, V_ph drops along with the occurrence of avalanche multiplication, and, upon a decision threshold being exceeded, the pulse signal P_ph rises. The pulse signal P_ph that is High is input to the input G of the D latch circuit 124. At this time, the judge signal P_judge of the input D is input, as the output Q of the D latch circuit 124, to the other of the input terminals of the AND circuit 125. Therefore, H is output as the pulse signal P_sig, which is the logical product of the judge signals P_judge. Note that, when the judge signal P_judge is Low, even if a photon is incident and the pulse signal P_ph becomes High, the input G of the D latch circuit 124 becomes High, but the input D is Low, and therefore the pulse signal P_sig remains Low. Accordingly, it follows that the judge signal P_judge controls the gating operation of the processing circuit 104 that functions as a gating circuit.

At time t4, a photon is further incident on the APD 101. Due to avalanche multiplication caused by the photon incident on the APD 101 at time t3, the potential of V_ph has decreased, and avalanche multiplication due to the photon incident at time t4 does not occur.

At time t5, the judge signal P_judge falls, and the count period ends. Along with the falling of the judge signal P_judge, the pulse signal P_sig also falls.

At time t6, the clock signal P_PCLK is input again to the switch 112 of the quench element, and the APD 101 enters the charge state. That is, V_ph is charged, and, upon a decision threshold being exceeded, P_ph falls. In this standby-state period, a photon enters the APD 101 during the count period, and therefore signals based on photon detection are counted.

At time t6, the APD 101 is charged, and, in the next standby-state period beginning from time t7, the judge signal P_judge input to the AND circuit 125 becomes High at time t8, and the count period begins. The judge signal P_judge that is High is input to one of the input terminals of the AND circuit 125. At this time, V_ph is in a state where the reverse bias voltage is charged, and the pulse signal P_ph is Low. That is, the input G of the D latch circuit 124 is Low, and, at this time, the output Q is Low. The output Q is input to the other of the input terminals of the AND circuit 125. Accordingly, the pulse signal P_sig, which is the output of the AND circuit 125, is also Low.

The judge signal P_judge falls at time t9, and the count period ends. When a photon enters the APD 101 at time t10, V_ph drops, and, upon a decision threshold being exceeded, P_ph rises.

At time t11, the clock signal P_PCLK is input to the switch 112 of the quench element, and, upon V_ph being charged beyond the decision threshold, P_ph falls. Since the judge signal P_judge is Low during the period from time t9 to time t11, the pulse signal P_sig output during this period is also Low. In this standby-state period, there is no photon incidence on the APD 101 within the count period, and there is a photon incidence on the APD 101 only within the non-count period; therefore, the counting of the photon detection signal is not performed.

The next standby-state period begins from time t7.

By adopting a configuration like this, it is possible to set the count period anywhere freely during one standby-state period. In the configuration disclosed in the first embodiment, the non-count period is produced by stopping the count period at a predetermined time. In other words, the count period and the non-count period are necessarily set in the order of the count period and then the non-count period within one standby-state period. By contrast, the present embodiment makes it possible to perform such a setting that, within one standby-state period, the non-count period precedes the count period. Since the timing of detecting the first photon during the standby-state period varies depending on an amount of incident light, such a freedom in setting the count period and the non-count period further improves the convenience of sensitivity adjustment.

### (Third Embodiment)

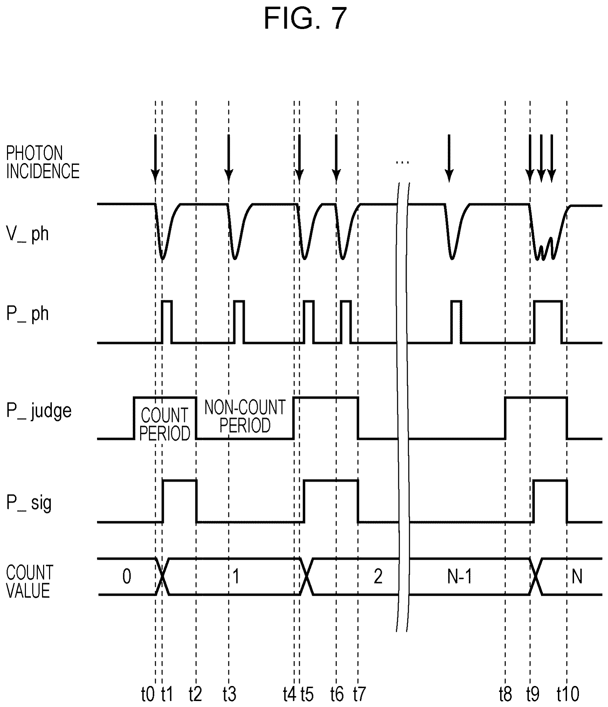

A photoelectric conversion device according to a third embodiment will be described with reference to Figs. 6 and 7. In a photoelectric conversion device to be disclosed in the present embodiment, a resistor element 132 is provided as the quench element 102. In the present embodiment, the controlling of the quench element by means of the clock signal is not performed. A photoelectric conversion device using an SPAD with so-called passive-recharge driving will be described.

Fig. 6 is a specific circuit-diagram configuration example. Fig. 7 is an operation sequence chart for the circuit configuration of Fig. 6. When a photon enters the APD 101 to which a reverse bias voltage exceeding the breakdown voltage is applied, avalanche multiplication occurs and the voltage of V_ph drops. After that, the avalanche operation is stopped by the quench element 102, and the voltage of V_ph returns to the initial state. As a result, a pulsed signal is input to the waveform shaping circuit. The waveform shaping circuit 103 is configured as the inverter circuit 113, and the signal of V_ph is shaped into the pulse signal P_ph. The pulse signal P_ph is input to the processing circuit 104. The processing circuit 104 includes a D latch circuit 134 and an AND circuit 135. As described earlier, the processing circuit functions as a gating circuit that controls whether or not to input the output signal of the waveform shaping circuit to the counter circuit 105, and its ON/OFF is controlled by the judge signal P_judge.

When a photon enters the APD 101 at time t0 in Fig. 7, V_ph drops along with the occurrence of avalanche multiplication, and, upon a decision threshold being exceeded, the pulse signal P_ph rises (time t1). Since this time is in the count period, in which the judge signal P_judge is high, the pulse signal P_sig becomes High at time t1, at which the pulse signal P_ph rises.

At time t2, the judge signal P_judge becomes Low, and the count period ends.

At time t3, which is during the non-count period, a photon is further incident on the APD 101. The pulse signal P_ph rises along with the drop of V_ph; however, since the judge signal P_judge is Low, the pulse signal P_sig is also Low.

At time t4, the judge signal P_judge rises, and the count period begins again. After that, a photon enters the APD 101, and along with the drop of V_ph, the pulse signal P_ph rises (time t5). Along with the rising of the pulse signal P_ph, the pulse signal P_sig also becomes High. When V_ph returns to High due to the operation of the quench element and exceeds the decision threshold, the pulse signal P_ph also falls. Meanwhile, since High continues to be input to both terminals of the AND circuit, the pulse signal P_sig maintains the state of High.

After that, at time t6, a photon is further incident on the APD 101, and the pulse signal P_ph rises again; however, since P_sig is maintained in the state of High, the count value does not change.

At time t7, the judge signal P_judge falls, and the count period ends.

In a case of imaging in a high-illuminance environment, the interval of photon incidence may become smaller than the time scale of recharge. When in such a case, the change in the voltage of V_ph cannot keep up with the photon incidence on the APD 101, causing a count loss, and there is a concern that a decrease in output may occur at a certain illuminance level or higher. The present embodiment makes it possible to perform the counting of photon detection signals while suppressing a decrease in output even under such imaging conditions. An example will be described for the count period starting from time t8. At time t8, the judge signal P_judge is High.

When a photon enters the APD 101 at time t9, avalanche multiplication occurs, and V_ph decreases. Although V_ph tries to return to the original potential by the action of the quench element 102, because of the incidence of a new photon without waiting for the recovery of the potential, V_ph becomes a value equal to or less than the decision threshold, and it could happen that the pulse signal P_ph becomes fixed at High (pile-up). In a situation without the processing circuit 104, under a high-illuminance environment where such pile-up continues for a long period, only "1" would be added to the counter circuit 105 during the period of pile-up; therefore, a decrease in output occurs at a certain illuminance level or higher.

By contrast, in the present configuration, the judge signal P_judge falls at time t10, and the pulse signal P_sig also falls. For this reason, even under a high-illuminance environment in which pile-up continues for a long period, signal addition to the counter is performed by the switching between High and Low of the judge signal P_judge, and therefore no decrease in output occurs.

By adopting such a configuration, it is possible to control whether or not the counter circuit 105 performs the counting of photon detection signals in accordance with switching between High and Low of the judge signal P_judge. That is, it is possible to adjust the sensitivity of the photoelectric conversion device by controlling the judge signal P_judge signal. Furthermore, by the switching between High and Low of P_judge, it is possible to prevent a decrease in output due to pile-up.

### (Fourth Embodiment)

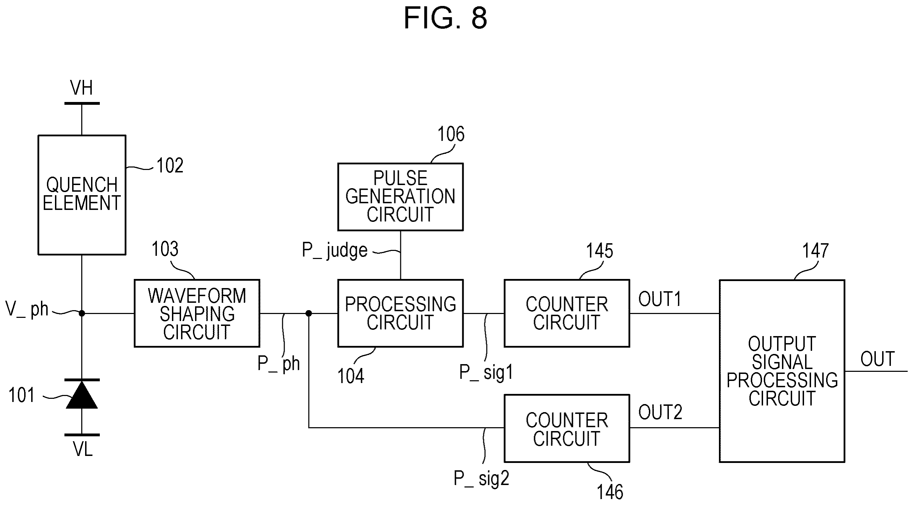

A photoelectric conversion device according to a fourth embodiment will be described with reference to Figs. 8 to 10. The photoelectric conversion device according to the present embodiment includes two counter circuits, and these counter circuits are capable of performing the counting of different values that overlap in time. The count values in the respective counter circuits are processed, and a single count value is output.

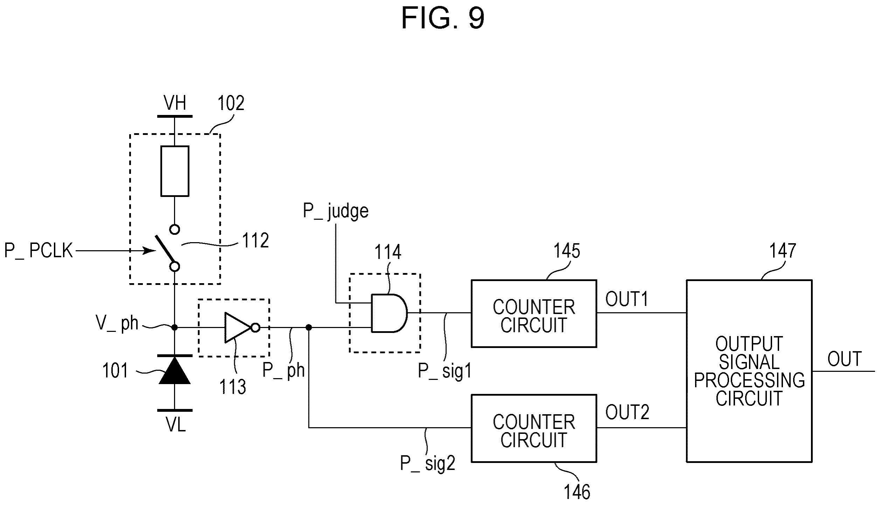

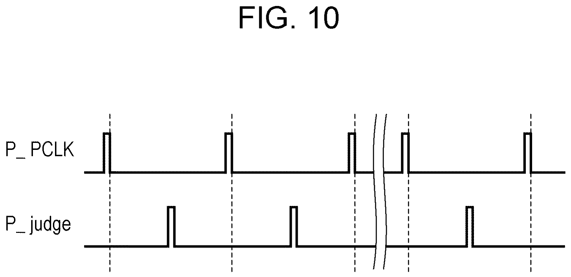

Fig. 8 is a schematic diagram of the photoelectric conversion device. Fig. 9 is a specific circuit-diagram configuration example. Fig. 10 is an operation sequence chart for the circuit configuration of Fig. 9.

The waveform shaping circuit 103 is connected to the cathode terminal of the APD 101 connected between the power supplies VL and VH. The pulse signal P_ph, which is the output signal of the waveform shaping circuit 103, is branched into a path for an input to a first counter circuit 145 via the processing circuit 104 and a path for a direct input to a second counter circuit 146. Here, the signal input to the first counter circuit 145 is referred to as P_sig1, and the signal input to the second counter circuit 146 is referred to as P_sig2. The judge signal P_judge, which is output from the pulse generation circuit 106, is input to the processing circuit 104.

Using a first count value OUT1, which is the output of the first counter circuit 145, photon detection signals in the count period limited by the judge signal P_judge signal are counted. On the other hand, using a second count value OUT2, which is the output signal of the second counter circuit 146, all photon detection signals are counted. Each of the first count value OUT1 and the second count value OUT2 is input to an output signal processing circuit 147, which is common to these two. The output signal processing circuit 147 is capable of, for example, comparing or combining the first count value OUT1 and the second count value OUT2. As illustrated in Fig. 9, an example is shown in which the inverter 113 is provided as the waveform shaping circuit 103, and the AND circuit 114 is provided as the processing circuit 104.

As illustrated in Fig. 10, the judge signal P_judge is input during each standby-state period from the inputting of one clock of the clock signal P_CLK to the switch 112 of the quench element to the inputting of the next clock. By this means, each standby-state period is separated into a count period and a non-count period.

By adopting such a configuration, it is possible to count outputs overlapping in time and having different sensitivities from the same photon detection signal and to output more suitable count information at the output signal processing circuit 147. For example, it is possible to obtain an image with reduced highlight blowout and a higher S/N ratio by outputting the count value not reaching the count upper limit of the counter circuit 145 or the counter circuit 146 and having the larger value, from among the first count value OUT1 or the second count value OUT2.

### (Fifth Embodiment)

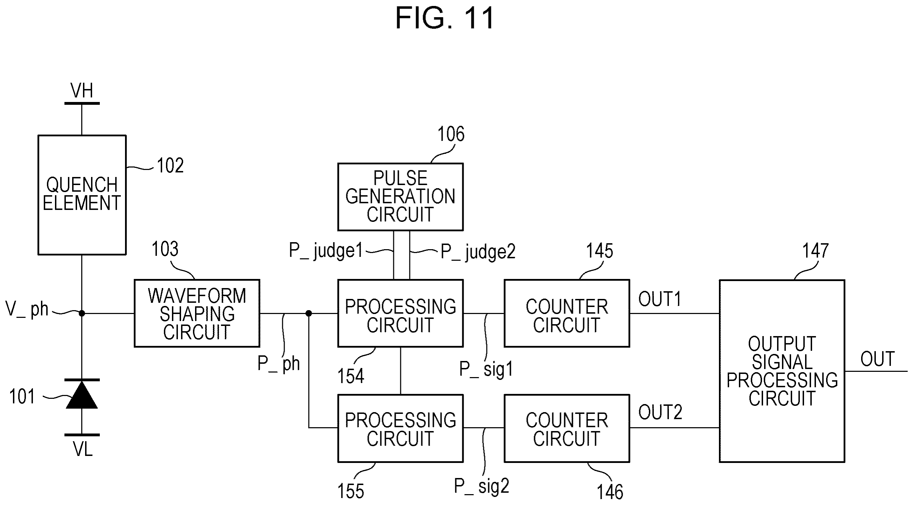

In Figs. 11 to 13, a variation example of the configuration of the fourth embodiment described above will be described as a fifth embodiment. The difference from the configuration illustrated in Figs. 8 to 11 lies in that each pixel includes two processing circuits, and each of these processing circuits is for the corresponding one of counter circuits.

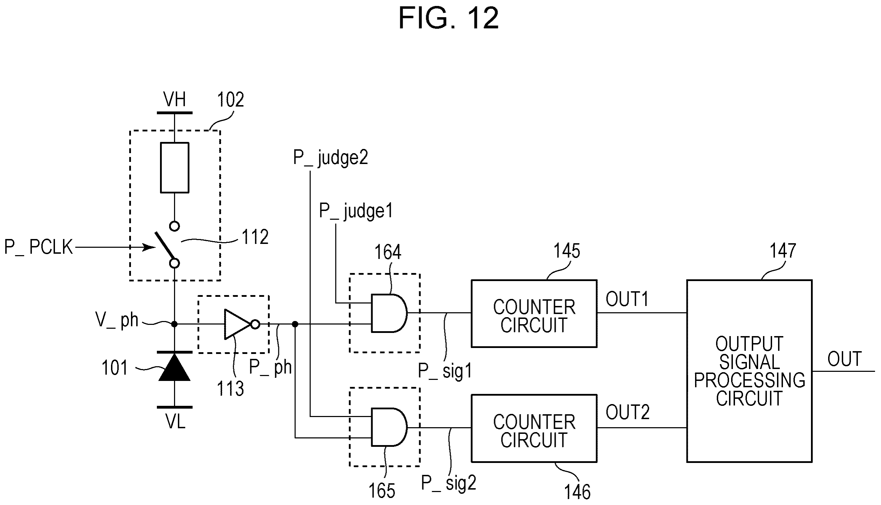

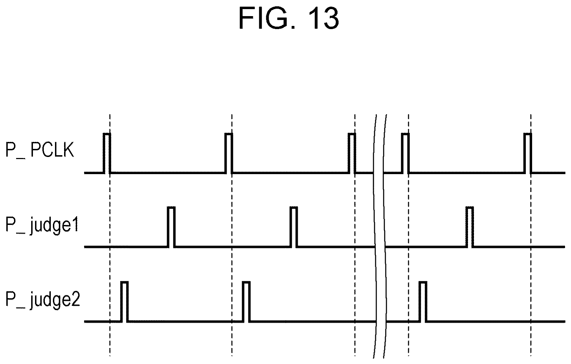

Fig. 11 is a schematic diagram of a photoelectric conversion device. Fig. 12 is a specific circuit-diagram configuration example. Fig. 13 is an operation sequence chart for the circuit configuration of Fig. 12.

The pulse signal P_ph, which is the output signal of the waveform shaping circuit, is branched into a path for an input to the first counter circuit 145 via a first processing circuit 154 and a path for an input to the second counter circuit 146 via a second processing circuit 155. A judge signal P_judge1 is input to the first processing circuit 154, and a judge signal P_judge2 is output to the second processing circuit 155. A pulse signal P_sig1, which is the output signal of the first processing circuit 154, is input, as OUT1 via the first counter circuit 145, to the output signal processing circuit 147. A pulse signal P_sig2, which is the output signal of the second processing circuit 155, is input, as OUT2 via the second counter circuit 146, to the output signal processing circuit 147. The quench element 102 includes the switch 112. The waveform shaping circuit 103 is, for example, an inverter circuit 113. The first processing circuit 154 and the second processing circuit 155 may be a first AND circuit 164 and a second AND circuit 165, respectively.

In such a configuration, the first processing circuit 154 and the second processing circuit 155 can be controlled by means of separate judge signals P_judge. That is, the same photon detection signal can be counted simultaneously as outputs having different sensitivities, and more suitable count information can be output at the output signal processing circuit 147. Using the two processing circuits and the judge signals P_judge makes it possible to acquire signal information with more combinations of conditions.

### (Sixth Embodiment)

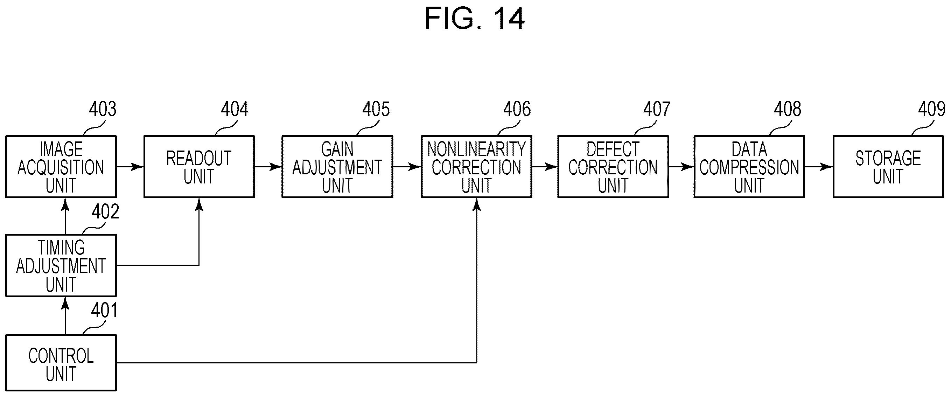

A photoelectric conversion system using the photoelectric conversion device according to each embodiment described above will be described with reference to Fig. 14. Fig. 14 is a block diagram illustrating a schematic configuration of the photoelectric conversion system according to the present embodiment.

A processing device according to a sixth embodiment includes a control unit 401, a timing adjustment unit 402, an image acquisition unit 403, a readout unit 404, a gain adjustment unit 405, a nonlinearity correction unit 406, a defect correction unit 407, a data compression unit 408, and a storage unit 409.

The image acquisition unit 403 is, for example, the APD 101, and the readout unit 404 is provided, for example, downstream of the counter circuit 105. The control unit 401 may be an internal control unit of the photoelectric conversion device, or may be provided outside the photoelectric conversion device. The image acquisition unit 403 is controlled by the timing adjustment unit 402 controlled by the control unit 401. Image data generated by the image acquisition unit is subjected to correction processing and then input to the storage unit 409. Note that the sequential order of the correction processing is not limited to the sequential order illustrated in Fig. 14.

The gain adjustment unit 405 is provided between the readout unit 404 and the nonlinearity correction unit 406, and applies a digital gain to image data generated by the image acquisition unit 403. Data for image correction often has fractional values; however, when the image output is an integer, there is a possibility of a decrease in correction accuracy due to a quantization error. Applying the gain to the image data in advance makes it possible to suppress the influence of the quantization error and improve the correction accuracy. Here, if the quantization error can be suppressed to one quarter or less of the one-photon-signal level, the corrected image will look visually natural. Therefore, it is desirable that the digital gain applied to the image data be, for example, four times or more.

The nonlinearity correction unit 406 is disposed between the gain adjustment unit 405 and the defect correction unit 407, and corrects the image data under control of the control unit 401. As described in the above embodiments, when the image acquisition unit 403 is a photon-counting type detector, a photoresponse is often nonlinear due to the influence of dead time. When affected by a nonlinear photoresponse, performing a correction on the premise of a linear response may result in overcorrection. Therefore, by performing a nonlinearity correction on the image data at a stage preceding an arithmetic process in the defect correction unit 407, it is possible to prevent overcorrection and to implement appropriate nonlinearity correction in accordance with drive timing. This nonlinearity correction is performed using, for example, a look-up table.

The defect correction unit 407 corrects data of defect pixels included in the image data. As a specific example, the output value of a defect pixel is extracted, and position information and the output value of the defect pixel are specified. There is a method of performing replacement with an average value or a median value of the outputs of pixels around the specified defect pixel, and there is a method of exclusion of estimated defect image data.

The data compression unit 408 performs compression of corrected image data. In the photoelectric conversion device according to the present invention, a vast amount of image data corresponding to a high dynamic range is generated. By providing the data compression unit 408, it is possible to compress the data before storing it into the storage unit 409 located downstream thereof.

The storage unit 409 stores at least a part of the image data generated in the preceding stage. Specifically, image data is stored in a memory such as an SRAM, a DRAM, or a nonvolatile memory as the storage unit.

As described above, according to the present embodiment, it is possible to realize a photoelectric conversion system to which the photoelectric conversion device according to any of the above-described embodiments is applied.

### (Seventh Embodiment)

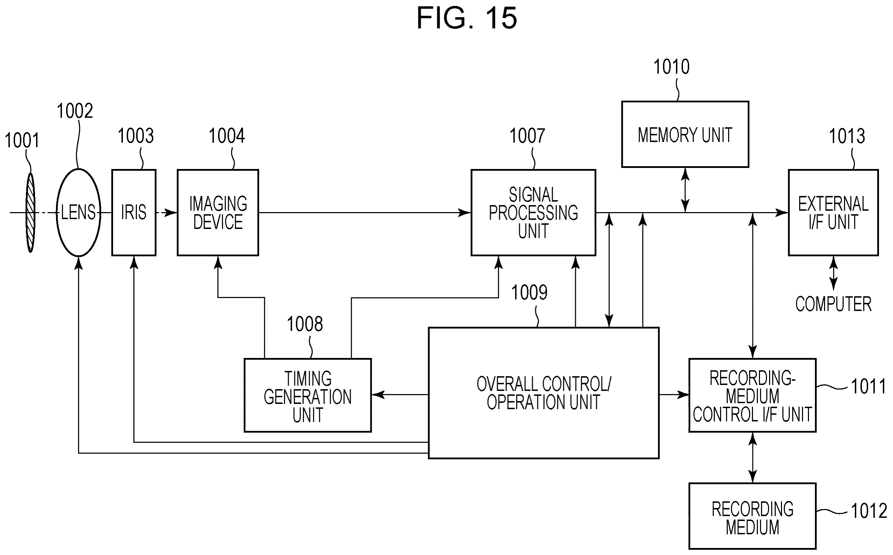

A photoelectric conversion system according to the present embodiment will be described with reference to Fig. 15. Fig. 15 is a block diagram illustrating a schematic configuration of the photoelectric conversion system according to the present embodiment.

The photoelectric conversion device described in the above embodiments can be applied to various photoelectric conversion systems. Examples of applicable photoelectric conversion systems include a digital still camera, a digital camcorder, a surveillance camera, a copying machine, a facsimile, a mobile phone, an in-vehicle camera, and an observation satellite. A camera module including an optical system such as a lens and an imaging device is also included in the photoelectric conversion systems. In Fig. 13, as an example among them, a block diagram of a digital still camera is illustrated.

The photoelectric conversion system illustrated as the example in Fig. 15 includes an imaging device 1004, which is an example of a photoelectric conversion device, and a lens 1002 configured to form an optical image of a subject on the imaging device 1004. The photoelectric conversion system further includes an iris 1003 for making an amount of light passing through the lens 1002 variable, and a barrier 1001 for protecting the lens 1002. The lens 1002 and the iris 1003 constitute an optical system that focuses light on the imaging device 1004. The imaging device 1004 is the photoelectric conversion device according to any of the above embodiments, and converts the optical image formed by the lens 1002 into an electrical signal.

The photoelectric conversion system includes a signal processing unit 1007, which is an image generation unit configured to generate an image by processing an output signal output from the imaging device 1004. The signal processing unit 1007 performs various corrections and compression as necessary and outputs image data. The signal processing unit 1007 may be formed in a semiconductor layer in which the imaging device 1004 is provided, or may be formed in a semiconductor layer different from the one in which the imaging device 1004 is provided. The imaging device 1004 and the signal processing unit 1007 may be formed in the same semiconductor layer.

The photoelectric conversion system further includes a memory unit 1010 for temporarily storing image data, and an external interface unit (external I/F unit) 1013 for communicating with an external computer, etc. The photoelectric conversion system further includes a recording medium 1012 such as a semiconductor memory for recording or reading imaging data and a recording-medium control interface unit (recording-medium control I/F unit) 1011 for recording or reading to/from the recording medium 1012. The recording medium 1012 may be built in the photoelectric conversion system, or may be detachable.

The photoelectric conversion system further includes an overall control/operation unit 1009 configured to perform various arithmetic operations and control the entire digital still camera, and a timing generation unit 1008 configured to output various timing signals to the imaging device 1004 and the signal processing unit 1007. Here, timing signals and the like may be input from the outside, and the photoelectric conversion system suffices to include at least the imaging device 1004 and the signal processing unit 1007 configured to process the output signal output from the imaging device 1004.

The imaging device 1004 outputs an imaging signal to the signal processing unit 1007. The signal processing unit 1007 performs predetermined signal processing on the imaging signal output from the imaging device 1004, and outputs image data. The signal processing unit 1007 generates an image using the imaging signal.

As described above, according to the present embodiment, it is possible to realize a photoelectric conversion system to which the photoelectric conversion device (imaging device) according to any of the above embodiments is applied.

### (Eighth Embodiment)

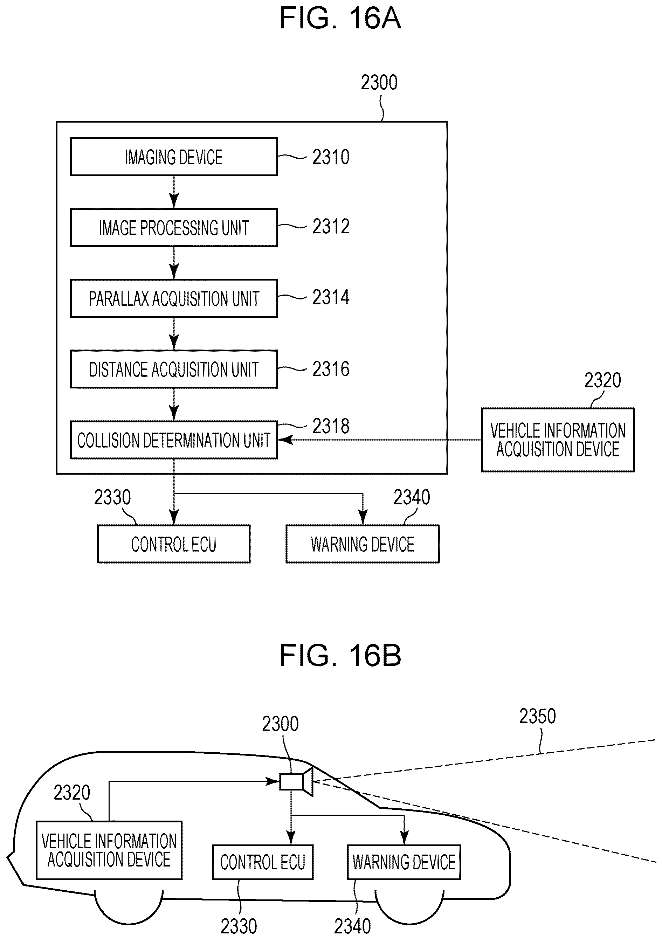

A photoelectric conversion system and a moving body according to the present embodiment will be described with reference to Figs. 16A and 16B. Figs. 16A and 16B are diagrams illustrating the configuration of a photoelectric conversion system and the configuration of a moving body according to the present embodiment.

Fig. 16A illustrates an example of a photoelectric conversion system related to a vehicle-mounted camera. A photoelectric conversion system 2300 includes an imaging device 2310. The imaging device 2310 is the photoelectric conversion device according to any of the above embodiments. The photoelectric conversion system 2300 includes an image processing unit 2312 configured to perform image processing on pieces of image data acquired by the imaging device 2310. The photoelectric conversion system 2300 further includes a parallax acquisition unit 2314 configured to calculate parallax (phase difference of a disparity image) from the pieces of image data acquired by the photoelectric conversion system 2300. The photoelectric conversion system 2300 further includes a distance acquisition unit 2316 configured to calculate a distance to a target object on the basis of the calculated parallax, and a collision determination unit 2318 configured to determine whether or not there is a possibility of collision on the basis of the calculated distance. Here, the parallax acquisition unit 2314 and the distance acquisition unit 2316 constitute an example of distance information acquisition means for acquiring information on the distance to the target object. That is, distance information may be acquired not only based on a phase difference but also by using a ToF (Time Of Flight) technique. The collision determination unit 2318 may determine the possibility of collision using any of these kinds of distance information. The distance information acquisition means may be implemented by dedicated hardware, or may be implemented by software modules. It may be implemented by an FPGA (Field Programmable Gate Array) or an ASIC (Application Specific Integrated Circuit), or may be implemented by a combination thereof.

The photoelectric conversion system 2300 is connected to a vehicle information acquisition device 2320, and is capable of acquiring vehicle information such as vehicle speed, yaw rate, and steering angle. The photoelectric conversion system 2300 is connected also to a control ECU 2330, which is a control device (control unit) configured to output a control signal for generating a braking force to the vehicle on the basis of the determination result in the collision determination unit 2318. The photoelectric conversion system 2300 is connected also to a warning device 2340 configured to issue a warning to a driver on the basis of the determination result in the collision determination unit 2318. For example, when the possibility of collision is high as the determination result of the collision determination unit 2318, the control ECU 2330 performs vehicle control to avoid a collision or reduce damage by, for example, applying the brakes, releasing the accelerator, or suppressing engine output. The warning device 2340 warns the user by sounding an alarm such as warning sound, displaying warning information on a screen such as a car navigation system, or applying vibrations to a seatbelt or a steering wheel.

In the present embodiment, an image of the surroundings of a vehicle, for example, the front or rear, is captured by the photoelectric conversion system 2300. Fig. 16B illustrates a photoelectric conversion system in a case where the front of the vehicle (imaging range 2350) is imaged. The vehicle information acquisition device 2320 sends an instruction to the photoelectric conversion system 2300 or to the imaging device 2310. With such a configuration, it is possible to further improve the accuracy of distance measurement.

In the above description, an example has been shown in which control is performed to avoid a collision with another vehicle; however, the present invention can be applied also to control for automatic driving that follows another vehicle or control for automatic driving that prevents lane departure. Furthermore, the applications of the photoelectric conversion system are not limited to vehicular applications such as one's own vehicle; for example, the photoelectric conversion system can be applied to moving bodies (moving apparatuses) such as a ship, an aircraft, or an industrial robot. In addition, it can be applied to a wide variety of apparatuses that use object recognition, such as an intelligent transport system (ITS), without being limited to moving bodies.

### (Ninth Embodiment)

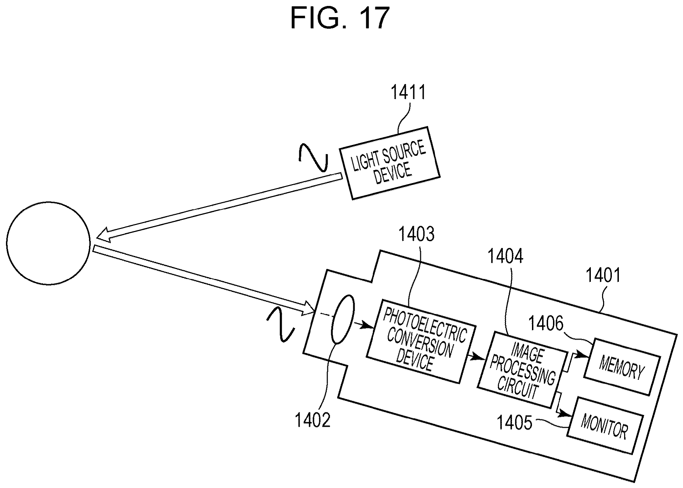

A photoelectric conversion system according to the present embodiment will be described with reference to Fig. 17. Fig. 17 is a block diagram illustrating an example of the configuration of a distance image sensor that is a photoelectric conversion system.

As illustrated in Fig. 17, a distance image sensor 1401 includes an optical system 1402, a photoelectric conversion device 1403, an image processing circuit 1404, a monitor 1405, and a memory 1406. The distance image sensor 1401 is capable of acquiring a distance image corresponding to the distance to a subject by receiving light (modulated light or pulsed light) that is projected toward the subject from a light source device 1411 and is then reflected on the surface of the subject.

The optical system 1402 is configured with a single lens or a plurality of lenses and guides image light (incident light) from the subject to the photoelectric conversion device 1403 and forms an image on a light-receiving surface (sensor section) of the photoelectric conversion device 1403.

As the photoelectric conversion device 1403, the photoelectric conversion device described in the above embodiments is applied, and a distance signal indicating a distance, which is obtained from a received-light signal output from the photoelectric conversion device 1403, is supplied to the image processing circuit 1404.

The image processing circuit 1404 performs image processing for constructing a distance image on the basis of the distance signal supplied from the photoelectric conversion device 1403. The distance image (image data) obtained by the image processing is supplied to the monitor 1405 to be displayed thereon or is supplied to the memory 1406 to be stored (recorded) therein.

In the distance image sensor 1401 configured as described above, by applying the above-described photoelectric conversion device, along with an improvement in pixel characteristics, it is possible to acquire, for example, a more accurate distance image.

### (Tenth Embodiment)

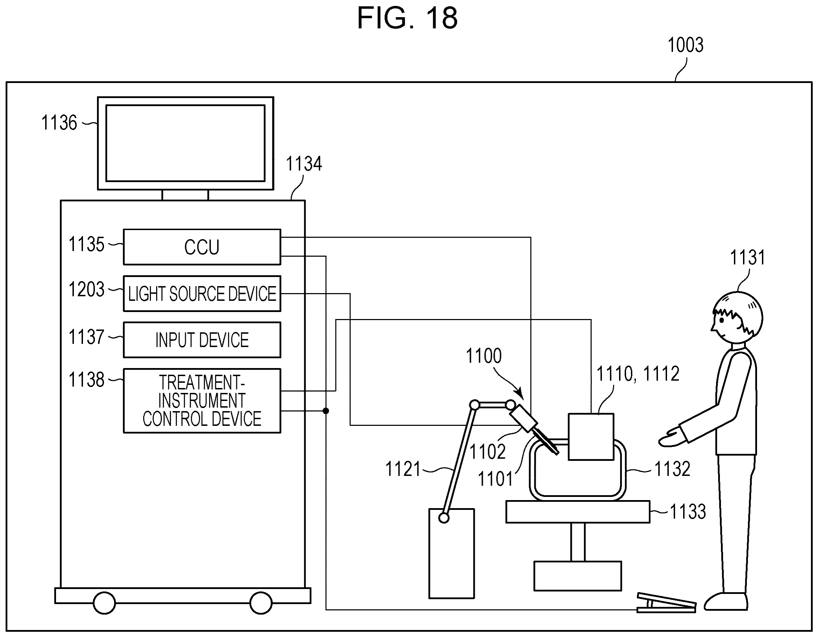

A photoelectric conversion system according to the present embodiment will be described with reference to Fig. 18. Fig. 18 is a diagram illustrating an example of a schematic configuration of an endoscopic surgery system that is a photoelectric conversion system according to the present embodiment.

Fig. 18 illustrates a state in which an operator (surgeon) 1131 performs surgery on a patient 1132 on a patient bed 1133 using an endoscopic surgery system 1103. As illustrated therein, the endoscopic surgery system 1103 includes an endoscope 1100, a surgical instrument 1110, and a cart 1134 on which various devices for endoscopic surgery are mounted.

The endoscope 1100 includes a barrel 1101 having a region of a predetermined length from a distal end to be inserted into a body cavity of the patient 1132, and a camera head 1102 connected to a proximal end of the barrel 1101. In the illustrated example, the endoscope 1100 is illustrated as a so-called hard scope having a hard barrel 1101; however, the endoscope 1100 may be configured as a so-called soft scope having a soft barrel.

An opening in which an objective lens is fitted is provided at the distal end of the barrel 1101. A light source device 1203 is connected to the endoscope 1100, and light generated by the light source device 1203 is guided to the distal end of the barrel by a light guide extending inside the barrel 1101, and is irradiated toward an observation target in the body cavity of the patient 1132 via the objective lens. The endoscope 1100 may be a direct-view scope, an oblique-view scope, or a side-view scope.

An optical system and a photoelectric conversion device are provided inside the camera head 1102, and reflected light (observation light) from the observation target is focused by the optical system on the photoelectric conversion device. The observation light is photoelectrically converted by the photoelectric conversion device, and an electric signal corresponding to the observation light, that is, an image signal corresponding to an observation image, is generated. The photoelectric conversion device described in the above embodiments can be used as the photoelectric conversion device. The image signal is transmitted as RAW data to a camera control unit (CCU) 1135.

The CCU 1135 is composed of a CPU (Central Processing Unit) and a GPU (Graphics Processing Unit), etc., and comprehensively controls the operations of the endoscope 1100 and a display device 1136. Furthermore, the CCU 1135 receives the image signal from the camera head 1102, and performs various kinds of image processing for displaying an image based on the image signal, such as, for example, development processing (demosaicing processing), on the image signal.

The display device 1136, under control from the CCU 1135, displays an image based on the image signal subjected to the image processing by the CCU 1135.

The light source device 1203 includes a light source such as, for example, an LED (Light Emitting Diode), and supplies illumination light for imaging the surgical site to the endoscope 1100.

An input device 1137 is an input interface to the endoscopic surgery system 1103. The user can make various inputs of information and instructions to the endoscopic surgery system 1103 via the input device 1137.

A treatment-instrument control device 1138 controls the driving of an energy treatment instrument 1112 for, for example, cauterization of tissue, incision, or sealing of blood vessels.

The light source device 1203, which supplies the illumination light for imaging the surgical site to the endoscope 1100, can be configured as a white light source that is, for example, an LED, a laser light source, or a combination thereof. When a white light source is configured by a combination of RGB laser light sources, it is possible to control output intensity and output timing of each color (each wavelength) with high accuracy, and, therefore, white balance adjustment of a captured image can be performed in the light source device 1203. In this case, it is also possible to perform time-division capturing of images corresponding to R, G, and B respectively by irradiating laser light from each of the RGB laser light sources in a time-division manner toward the observation target and controlling the driving of an imaging element of the camera head 1102 in synchronization with the irradiation timing. If this method is used, it is possible to obtain a color image even without providing a color filter on the imaging element.

The light source device 1203 may have its driving controlled in such a way as to change the intensity of light to be output at predetermined time intervals. By controlling the driving of the imaging element of the camera head 1102 in synchronization with the timing of the change in the intensity of the light, by acquiring images in a time-division manner, and by synthesizing these images, it is possible to generate a high dynamic range image with so-called no black crushing and no highlight blowout.

The light source device 1203 may be configured to be capable of supplying light in a predetermined wavelength band corresponding to special-light observation. In special-light observation, for example, wavelength dependence of light absorption in biological tissue is utilized. Specifically, by irradiating light having a narrower band than irradiation light irradiated during normal observation (that is, white light), imaging of predetermined tissue such as blood vessels in a mucosal surface layer at high contrast is performed. Alternatively, in special-light observation, fluorescence observation for obtaining an image by fluorescence generated by irradiation of excitation light may be performed. In fluorescence observation, excitation light is irradiated on biological tissue to observe fluorescence from the biological tissue, or a reagent such as indocyanine green (ICG) is locally injected into the biological tissue and excitation light corresponding to a fluorescence wavelength of the reagent is irradiated on the biological tissue to obtain a fluorescence image. The light source device 1203 can be configured to be capable of supplying narrowband light and/or excitation light corresponding to such special-light observation.

### (Eleventh Embodiment)

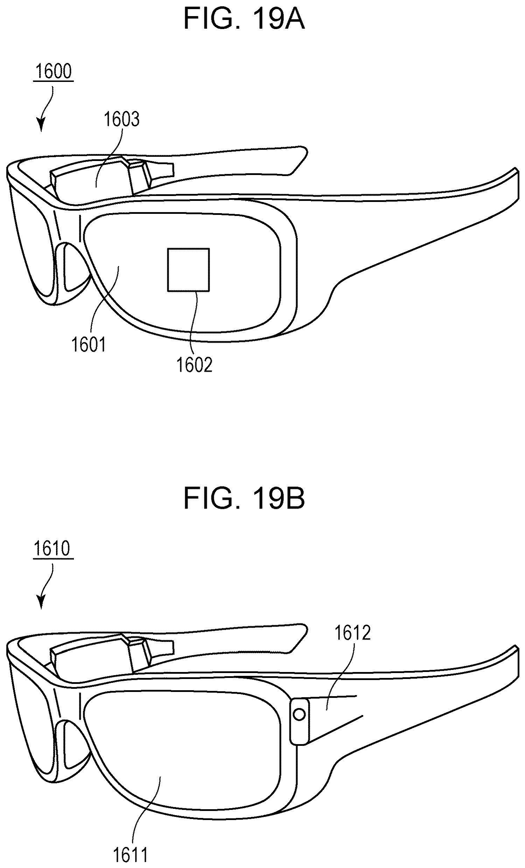

A photoelectric conversion system according to the present embodiment will be described with reference to Figs. 19A and 19B. Fig. 19A is a diagram illustrating an example of the configuration of eyeglasses 1600 (smart glasses) constituting a photoelectric conversion system. The eyeglasses 1600 include a photoelectric conversion device 1602. The photoelectric conversion device 1602 is the photoelectric conversion device described in the above to the twelfth embodiments. A display device including a light emitting device such as an OLED or an LED may be provided on the back of a lens 1601. The photoelectric conversion device 1602 may be a single device or a plurality of devices. More than one type of photoelectric conversion device may be used in combination. The position where the photoelectric conversion device 1602 is disposed is not limited to that in Fig. 19A.

The eyeglasses 1600 further include a control device 1603. The control device 1603 functions as a power supply that supplies electric power to the photoelectric conversion device 1602 and the display device described above. In addition, the control device 1603 controls the operations of the photoelectric conversion device 1602 and the display device. An optical system for focusing light on the photoelectric conversion device 1602 is formed on the lens 1601.

Fig. 19B illustrates eyeglasses 1610 (smart glasses) according to one application example. The eyeglasses 1610 include a control device 1612. A photoelectric conversion device corresponding to the photoelectric conversion device 1602, and a display device, are mounted on the control device 1612. On the lens 1611, an optical system for projecting light emitted from the photoelectric conversion device in the control device 1612 and from the display device is formed, and an image is projected onto the lens 1611. The control device 1612 functions as a power supply that supplies electric power to the photoelectric conversion device and the display device, and controls the operations of the photoelectric conversion device and the display device. The control device may include a line-of-sight detection unit configured to detect a wearer's line of sight. Infrared rays may be used for the detection of the line of sight. An infrared emitting unit emits infrared light toward the eyeball of the user who is gazing at a displayed image. By detecting reflected light of the infrared light from the eyeball by an imaging unit including a light receiving element, a captured image of the eyeball is obtained. By providing a reduction means configured to reduce light from the infrared emitting unit to the display unit in a plan view, it is possible to reduce deterioration in image quality.

The line of sight of the user with respect to the displayed image is detected from the captured image of the eyeball obtained through infrared light imaging. Any known method can be applied to the line-of-sight detection using the captured image of the eyeball. As an example, a line-of-sight detection method based on a Purkinje image due to reflection of irradiation light at a cornea can be used.

More specifically, line-of-sight detection processing based on a pupil-corneal reflection method is performed. By using the pupil-corneal reflection method, based on an image of the pupil and the Purkinje image that are included in the captured image of the eyeball, a line-of-sight vector representing the orientation (rotation angle) of the eyeball is calculated, thereby detecting the user's line of sight.

A display device according to the present embodiment may include a photoelectric conversion device including a light receiving element, and a display image of the display device may be controlled on the basis of line-of-sight information of a user from the photoelectric conversion device.

Specifically, in the display device, based on the line-of-sight information, a first field-of-view region gazed at by the user and a second field-of-view region other than the first field-of-view region are determined. The first field-of-view region and the second field-of-view region may be determined by a control device of the display device, or may be received as those determined by an external control device. In a display region of the display device, the display resolution of the first field-of-view region may be controlled to be higher than the display resolution of the second field-of-view region. That is, the resolution of the second field-of-view region may be made lower than that of the first field-of-view region.

The display region may include a first display region and a second display region different from the first display region, and, based on the line-of-sight information, a region with a higher priority may be determined from the first display region and the second display region. The first field-of-view region and the second field-of-view region may be determined by a control device of the display device, or may be received as those determined by an external control device. The resolution of the region with a higher priority may be controlled to be higher than the resolution of a region other than the region with a higher priority. That is, the resolution of the region whose priority is relatively low may be lower.

For determining the first field-of-view region and/or the region with a higher priority, AI may be used. The AI may be a model configured to estimate, from images of eyeballs and the actual direction of view by the eyeballs in the images as teacher data, the angle of the line of sight and the distance to the target at which the line of sight is directed. An AI program may be installed in the display device, the photoelectric conversion device, or an external device. In a case of the external device, it is transmitted to the display device via communication.

In a case where display control is performed on the basis of visual detection, a preferred application is to smart glasses further including a photoelectric conversion device configured to image an outside. The smart glasses can display external information captured in real time.

The embodiments described above can be modified as appropriate within a range of not departing from the technical concept. Examples in which a part of a configuration of any embodiment is added to another embodiment or replaced with a part of a configuration of another embodiment are also encompassed in the embodiments of the present invention.

The disclosure of the present embodiment includes the following configurations and methods.

### (Configuration 1)

A photoelectric conversion device includes a photoelectric conversion element configured to generate a photon detection signal by avalanche multiplication; and a circuit configured to control a first state in which a first terminal of the photoelectric conversion element is connected to a power-supply voltage and a second state in which resistance between the first terminal and the power-supply voltage is higher than in the first state. The photoelectric conversion device includes a counter circuit connected to the photoelectric conversion element; and a waveform shaping circuit disposed between the photoelectric conversion element and the counter circuit. The photoelectric conversion device further includes a gating circuit connected between an output node of the waveform shaping circuit and an input node of the counter circuit and configured to control whether or not to input an output signal of the waveform shaping circuit to the counter circuit.

### (Configuration 2)

The photoelectric conversion device according to configuration 1, wherein, during one standby state, there are a first period in which an output signal of the waveform shaping circuit is counted and a second period in which the gating circuit is controlled so as not to count an output signal of the waveform shaping circuit.

### (Configuration 3)

The photoelectric conversion device according to configuration 1 or 2, wherein, in the second state, the first terminal and the power-supply voltage are not connected.

### (Configuration 4)

The photoelectric conversion device according to any of configurations 1 to 3, comprising: a pulse generation circuit, wherein the pulse generation circuit outputs a judge signal that controls whether or not the gating circuit counts an output signal of the waveform shaping circuit.

### (Configuration 5)

The photoelectric conversion device according to configuration 4, wherein a signal output from the waveform shaping circuit and the judge signal are input to the gating circuit.

### (Configuration 6)

The photoelectric conversion device according to configuration 5, wherein one count period of the counter circuit is a period from a start of the second state until a pulse of the judge signal is input to the gating circuit.

### (Configuration 7)

The photoelectric conversion device according to configuration 5, wherein the gating circuit includes an AND circuit, and the output signal of the waveform shaping circuit and the judge signal are input to the AND circuit.

### (Configuration 8)

The photoelectric conversion device according to configuration 5, wherein a period during which counting by the counter circuit is performed is defined by a period in which a level of the judge signal is High, or by a period in which the level of the judge signal is Low.

### (Configuration 9)

The photoelectric conversion device according to configuration 8, wherein the processing circuit includes a D latch, and the output signal of the waveform shaping circuit and the judge signal are input to the D latch.

### (Configuration 10)

The photoelectric conversion device according to any of configurations 1 to 9, comprising: a second counter circuit connected to an output node of the photoelectric conversion element.

### (Configuration 11)

The photoelectric conversion device according to configuration 10, wherein, in response to a single input of an output signal of the waveform shaping circuit, the counter circuit outputs a first count value, and the second counter circuit outputs a second count value, and counting of the first count value and counting of the second count value are performed with an overlap in time.

### (Configuration 12)

The photoelectric conversion device according to configuration 11, comprising: a signal processing circuit configured to process the first count value and the second count value and output a single count value.

### (Configuration 13)

A photoelectric conversion device includes a photoelectric conversion element configured to generate a photon detection signal by avalanche multiplication; a resistor element provided between a first terminal of the photoelectric conversion element and a power-supply voltage; and a counter circuit connected to an output node of the photoelectric conversion element. The photoelectric conversion device includes a waveform shaping circuit disposed between the photoelectric conversion element and the counter circuit; and a gating circuit disposed between an output node of the waveform shaping circuit and an input node of the counter circuit and configured to control whether or not to input an output signal of the waveform shaping circuit to the counter circuit. During one standby state, there are a first period in which an output signal of the waveform shaping circuit is counted and a second period in which the gating circuit is controlled so as not to count an output signal of the waveform shaping circuit. The photoelectric conversion device includes a circuit configured to count a number of the first periods in which the output signal of the waveform shaping circuit has been counted.

### (Configuration 14)

The photoelectric conversion device according to configuration 13, wherein the resistor element is a quench element.

### (Configuration 15)

The photoelectric conversion device according to configuration 14, comprising: a pulse generation circuit, wherein the pulse generation circuit outputs a judge signal that controls whether or not the gating circuit counts an output signal of the waveform shaping circuit.

### (Configuration 16)

The photoelectric conversion device according to configuration 15, wherein a signal output from the waveform shaping circuit and the judge signal are input to the gating circuit.

### (Configuration 17)

The photoelectric conversion device according to configuration 16, wherein a period during which counting by the counter circuit is performed is defined by a period in which a level of the judge signal is High, or by a period in which the level of the judge signal is Low.

### (Configuration 18)

The photoelectric conversion device according to configuration 17, wherein the processing circuit includes a D latch, and the output signal of the waveform shaping circuit and the judge signal are input to the D latch.

### (Configuration 19)

A photoelectric conversion system including: the photoelectric conversion device according to any one of configurations 1 to 18; and a signal processing unit configured to generate an image by using a signal output from the photoelectric conversion device.

### (Configuration 20)

A moving body including: the photoelectric conversion device according to any one of configurations 1 to 18; and a control unit configured to control movement of the moving body by using a signal output from the photoelectric conversion device.

The present invention shall not be construed to be limited to the foregoing embodiments. Various changes and modifications may be made without departing from the spirit and scope of the present invention. To publicize the scope of the present invention, the claims shown below are appended hereto.

This application claims the benefit of Japanese Patent Application No. 2023-108683 filed on June 30, 2023, which is hereby incorporated by reference herein in its entirety.

### Reference Signs List

- 101: avalanche photodiode
- 102: quench element
- 105: counter circuit
- 103: waveform shaping circuit
- 104: processing circuit

## Claims

1. A photoelectric conversion device comprising:
a photoelectric conversion element configured to generate a photon detection signal by avalanche multiplication;
a circuit configured to control a first state in which a first terminal of the photoelectric conversion element is connected to a power-supply voltage and a second state in which resistance between the first terminal and the power-supply voltage is higher than in the first state;
a counter circuit connected to the photoelectric conversion element;
a waveform shaping circuit disposed between the photoelectric conversion element and the counter circuit; and
a gating circuit connected between an output node of the waveform shaping circuit and an input node of the counter circuit and configured to control whether or not to input an output signal of the waveform shaping circuit to the counter circuit.

2. The photoelectric conversion device according to claim 1, wherein
during one standby state, there are a first period in which an output signal of the waveform shaping circuit is counted and a second period in which the gating circuit is controlled so as not to count an output signal of the waveform shaping circuit.

3. The photoelectric conversion device according to claim 1, wherein
in the second state, the first terminal and the power-supply voltage are not connected.

4. The photoelectric conversion device according to claim 1, comprising:
a pulse generation circuit, wherein
the pulse generation circuit outputs a judge signal that controls whether or not the gating circuit counts an output signal of the waveform shaping circuit.

5. The photoelectric conversion device according to claim 4, wherein
a signal output from the waveform shaping circuit and the judge signal are input to the gating circuit.

6. The photoelectric conversion device according to claim 5, wherein
one count period of the counter circuit is a period from a start of the second state until a pulse of the judge signal is input to the gating circuit.

7. The photoelectric conversion device according to claim 5, wherein
the gating circuit includes an AND circuit, and
the output signal of the waveform shaping circuit and the judge signal are input to the AND circuit.

8. The photoelectric conversion device according to claim 5, wherein
a period during which counting by the counter circuit is performed is defined by a period in which a level of the judge signal is High, or by a period in which the level of the judge signal is Low.

9. The photoelectric conversion device according to claim 8, wherein
the processing circuit includes a D latch, and
the output signal of the waveform shaping circuit and the judge signal are input to the D latch.

10. The photoelectric conversion device according to claim 1, comprising:
a second counter circuit connected to an output node of the photoelectric conversion element.

11. The photoelectric conversion device according to claim 10, wherein
in response to a single input of an output signal of the waveform shaping circuit, the counter circuit outputs a first count value, and the second counter circuit outputs a second count value, and
counting of the first count value and counting of the second count value are performed with an overlap in time.

12. The photoelectric conversion device according to claim 11, comprising:
a signal processing circuit configured to process the first count value and the second count value and output a single count value.

13. A photoelectric conversion device comprising:
a photoelectric conversion element configured to generate a photon detection signal by avalanche multiplication;
a resistor element provided between a first terminal of the photoelectric conversion element and a power-supply voltage;
a counter circuit connected to an output node of the photoelectric conversion element;
a waveform shaping circuit disposed between the photoelectric conversion element and the counter circuit; and
a gating circuit disposed between an output node of the waveform shaping circuit and an input node of the counter circuit and configured to control whether or not to input an output signal of the waveform shaping circuit to the counter circuit, wherein
during one standby state, there are a first period in which an output signal of the waveform shaping circuit is counted and a second period in which the gating circuit is controlled so as not to count an output signal of the waveform shaping circuit; and the photoelectric conversion device comprises a circuit configured to count a number of the first periods in which the output signal of the waveform shaping circuit has been counted.

14. The photoelectric conversion device according to claim 13, wherein
the resistor element is a quench element.

15. The photoelectric conversion device according to claim 14, comprising:
a pulse generation circuit, wherein
the pulse generation circuit outputs a judge signal for controlling whether or not the gating circuit counts the output signal of the waveform shaping circuit.

16. The photoelectric conversion device according to claim 15, wherein
a signal output from the waveform shaping circuit and the judge signal are input to the gating circuit.

17. The photoelectric conversion device according to claim 16, wherein
a period during which counting by the counter circuit is performed is defined by a period in which a level of the judge signal is High, or by a period in which the level of the judge signal is Low.

18. The photoelectric conversion device according to claim 17, wherein
the processing circuit includes a D latch, and
the output signal of the waveform shaping circuit and the judge signal are input to the D latch.

19. A photoelectric conversion system comprising:
the photoelectric conversion device according to any one of claims 1 to 18; and
a signal processing unit configured to generate an image by using a signal output from the photoelectric conversion device.

20. A moving body comprising:
the photoelectric conversion device according to any one of claims 1 to 18; and
a control unit configured to control movement of the moving body by using a signal output from the photoelectric conversion device.
